(19) Europäisches Patentamt

European Patent Office

Office européen des brevets

(11) **EP 2 976 516 B1**

(12) **FASCICULE DE BREVET EUROPEEN**

(45) Date de publication et mention
de la délivrance du brevet:
**23.09.2020 Bulletin 2020/39**

(21) Numéro de dépôt: **14710006.9**

(22) Date de dépôt: **14.02.2014**

(51) Int Cl.:
*F02D 41/14* (2006.01)    *F02D 41/22* (2006.01)
*G01N 27/416* (2006.01)    *F01N 11/00* (2006.01)

(86) Numéro de dépôt international:
**PCT/FR2014/050301**

(87) Numéro de publication internationale:
**WO 2014/147308 (25.09.2014 Gazette 2014/39)**

(54) **PROCEDE DE DIAGNOSTIC D'UN SYSTEME DE DEPOLLUTION DE GAZ D'ÉCHAPPEMENT**

DIAGNOSEVERFAHREN EINES ABGASNACHBEHANDLUNGSSYSTEMS

DIAGNOSTIC METHOD OF AN EXHAUST GAS AFTERTREATMENT SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.03.2013 FR 1352444**

(43) Date de publication de la demande:
**27.01.2016 Bulletin 2016/04**

(73) Titulaire: **Renault S.A.S.**
**92100 Boulogne-Billancourt (FR)**

(72) Inventeurs:
• **SELLAMI, Ali**
  **F-75015 Paris (FR)**
• **CHANZY, Romain**
  **F-75116 Paris (FR)**
• **NORMAND, Benoit**
  **F-77000 Vaux Le Penil (FR)**

(56) Documents cités:
**EP-A2- 0 796 988**     **DE-A1-102008 006 631**
**FR-A1- 2 940 460**     **US-A- 5 444 977**
**US-A- 5 568 725**

## Description

La présente invention se rapporte à un procédé de diagnostic d'un système de dépollution comprenant un piège à oxydes d'azote pour les véhicules comportant un moteur thermique. Elle concerne également un système de dépollution mettant en œuvre ledit procédé de diagnostic.

## Etat de la technique

Les constructeurs automobiles souhaitent réduire encore plus la pollution que pourraient générer leurs véhicules. Concernant la réduction des émissions d'oxydes d'azote, par les moteurs thermiques, les constructeurs équipent les véhicules d'un système de dépollution comportant un piège à oxydes d'azote.

Le piège à oxydes d'azote traite les oxydes d'azote selon un mode fonctionnement qui alterne essentiellement deux phases :

a. une phase de stockage des oxydes d'azote : cette phase correspond au mode de fonctionnement normal du moteur, par exemple à une combustion en mélange pauvre pour un moteur Diesel, durant laquelle le piège à oxydes d'azote stocke les oxydes d'azote sous forme par exemple de nitrate de baryum. Le stockage s'effectue avec une certaine efficacité qui est définie comme le pourcentage d'oxydes d'azote retenus dans le piège par rapport à la quantité entrante, le reste traversant le piège sans y être retenu.

b. une phase de purge des oxydes d'azote : cette phase est caractérisée par une combustion riche, c'est-à-dire avec une richesse supérieure à 1. Elle permet de volontairement générer des gaz réducteurs, par exemple en injectant du carburant dans les cylindres du moteur en fin de cycle. Ces réducteurs vont réduire les oxydes d'azote stockés. Cette phase dure environ une dizaine de secondes et est relativement fréquente, par exemple plusieurs fois par heure de fonctionnement.

Pour connaître le mode de fonctionnement du piège à oxydes d'azote, on équipe celui-ci d'une première sonde à oxygène en amont et d'une deuxième sonde en aval, en référence au sens de circulation des gaz d'échappement, les sondes délivrant un signal de richesse dans les gaz d'échappement. Le signal de richesse indique pour une valeur inférieure à 1 des gaz oxydants, et pour une richesse supérieure à 1 des gaz réducteurs. Ces sondes participent au diagnostic du système de dépollution et il est donc important de détecter une éventuelle défaillance de celle-ci.

Par exemple, la publication FR 2 916 017 montre la réalisation d'un diagnostic selon lequel on évalue la quantité de réducteurs consommés pendant la purge du piège à oxydes d'azote grâce aux sondes à oxygène. Cette quantité de réducteurs est l'image de la quantité d'oxydes d'azote stockée. Si la quantité de réducteurs consommée pendant une purge est trop faible, cela prouve que le piège à oxydes d'azote a perdu de son efficacité de stockage.

Il existe déjà des diagnostics des sondes à oxygène tels que des diagnostics électriques de court-circuit ou de rupture de circuit, des diagnostics de chauffage en vérifiant que la température d'un élément sensible de la sonde est correcte, ou encore des diagnostics de plausibilité en faisant une analyse temporelle des mesures fournies par la sonde.

Bien que ces diagnostics soient utiles, ils ne se fondent que sur l'analyse individuelle d'une seule sonde, mais pas du système dans lequel elle est intégrée.

L'invention vise à fournir un procédé de diagnostic d'un système de dépollution qui soit complémentaire aux diagnostics individuels des composants du système.

## Description de l'invention

Avec ces objectifs en vue, l'invention a pour objet un procédé de diagnostic d'un système de dépollution selon les enseignements du document FR-A1-2.940.460, un tel système de dépollution comportant un piège à oxydes d'azote recevant les gaz d'échappement d'un moteur thermique pour capter des oxydes d'azotes, une première sonde à oxygène placée en amont du piège à oxydes d'azote et une deuxième sonde à oxygène placée en aval du piège à oxydes d'azote, les sondes à oxygène délivrant un signal représentatif d'une richesse des gaz d'échappement, le procédé étant caractérisé en ce qu'on commande une variation de la richesse des gaz d'échappement, on compare la réponse des deux sondes et on déduit que l'une des sondes est défectueuse si le décalage temporel des réponses n'est pas dans un intervalle prédéterminé, l'intervalle comportant une première borne inférieure à une deuxième borne.

Le diagnostic selon l'invention utilise les réponses de chacune des deux sondes pour analyser la cohérence de leurs mesures. Il permet en particulier de détecter une augmentation du temps de réponse. Lorsque la sonde est soumise à une variation brusque de la grandeur à mesurer, un temps de réponse augmenté se traduira par un retard sur le signal fourni. Les deux sondes étant séparées par le piège à oxydes d'azote, qui comporte un certain volume, elles sont soumises aux gaz d'échappement avec un certain décalage temporel, le temps que les gaz traversent le piège à oxydes d'azote. Si le décalage temporel entre les signaux fournis par les sondes s'écarte de la valeur attendue,

EP 2 976 516 B1

c'est que l'une des sondes a un temps de réponse modifié, ce qui peut être associé à une défaillance. La variation brusque pourra avantageusement être le début ou la fin de la phase de déstockage des oxydes d'azote.

Selon l'invention, le décalage temporel est déterminé par l'intégration de la différence de mesure entre la deuxième et la première sonde sur une période d'intégration qui suit le début de la variation de richesse pilotée. On prend ainsi on compte les signaux sur l'ensemble de la période de transition, ce qui permet de s'affranchir d'une éventuelle perturbation sur une seule mesure. Il est cependant nécessaire d'effectuer plus des mesures et de calculs. Les essais ont également montré une bonne sensibilité de ce procédé de diagnostic.

La période d'intégration commence par exemple lorsque la deuxième sonde fournit une mesure correspondant à une mesure initiale du signal de la première sonde avant la variation de richesse pilotée à l'instant de départ de la phase de déstockage et se termine lorsque le signal de la deuxième sonde atteint un seuil d'intégration prédéterminé. On délimite bien ainsi la période d'intégration à la phase de transition des signaux. Le seuil d'intégration est par exemple déterminé en fonction de la consigne de richesse.

Lorsque le décalage temporel est inférieur à la première borne de l'intervalle, on conclut par exemple que la première sonde est défaillante. Lorsque le signal de la première sonde se rapproche du signal de la deuxième sonde, voire semble se produire après le signal de la deuxième sonde, c'est que la constante de temps de la première sonde est augmentée, ce qui est un signe de défaillance de la première sonde.

Inversement, lorsque le décalage temporel est supérieur à la deuxième borne de l'intervalle, on conclut que la deuxième sonde est défaillante.

Selon un perfectionnement, l'intervalle est prédéterminé en fonction du débit volumique des gaz d'échappement. Si le débit de gaz d'échappement augmente, le temps de transfert des gaz d'une sonde à l'autre diminue. Le décalage attendu entre les signaux diminue donc également. Il est donc logique d'adapter également le critère sur le décalage temporel.

L'invention a aussi pour objet un système de dépollution comportant un piège à oxydes d'azote recevant les gaz d'échappement d'un moteur thermique pour capter des oxydes d'azotes, une première sonde à oxygène placée en amont du piège à oxydes d'azote et une deuxième sonde à oxygène placée en aval du piège à oxydes d'azote, les sondes à oxygène délivrant un signal représentatif d'une richesse des gaz d'échappement, le système comportant en outre une unité centrale recevant les signaux des sondes, le système étant caractérisé en ce que l'unité centrale est agencée pour mettre en œuvre un procédé de diagnostic tel que décrit précédemment et selon lequel l'unité centrale commande une variation de la richesse des gaz d'échappement, compare la réponse des deux sondes et déduit que l'une des sondes est défectueuse si le décalage temporel des réponses n'est pas dans un intervalle prédéterminé, l'intervalle comportant une première borne inférieure à une deuxième borne, le décalage temporel étant déterminé par l'intégration de la différence de mesure entre la deuxième et la première sonde sur une période d'intégration qui suit le début de la variation de richesse pilotée.

## Brève description des figures

L'invention sera mieux comprise et d'autres particularités et avantages apparaîtront à la lecture de la description qui va suivre, la description faisant référence aux dessins annexés parmi lesquels :

- la figure 1 est une vue schématique d'un système de dépollution conforme à l'invention ;
- la figure 2 est un diagramme temporel des signaux de mesure des deux sondes de la figure 1 dans un fonctionnement normal ;
- la figure 3 est une vue similaire à la figure 2 lorsque la première sonde est défectueuse ;
- la figure 4 est une vue de détail des courbes de la figure 2, illustrant un exemple d'un procédé de diagnostic ;
- la figure 5 est une vue de détail des courbes de la figure 3, illustrant l'exemple du procédé de diagnostic de la figure 4 ;
- la figure 6 est une vue de détail des courbes de la figure 2, illustrant un mode de réalisation d'un procédé de diagnostic selon l'invention;
- la figure 7 est une vue de détail des courbes de la figure 3, illustrant le mode de réalisation du procédé selon l'invention.

## DESCRIPTION DETAILLEE

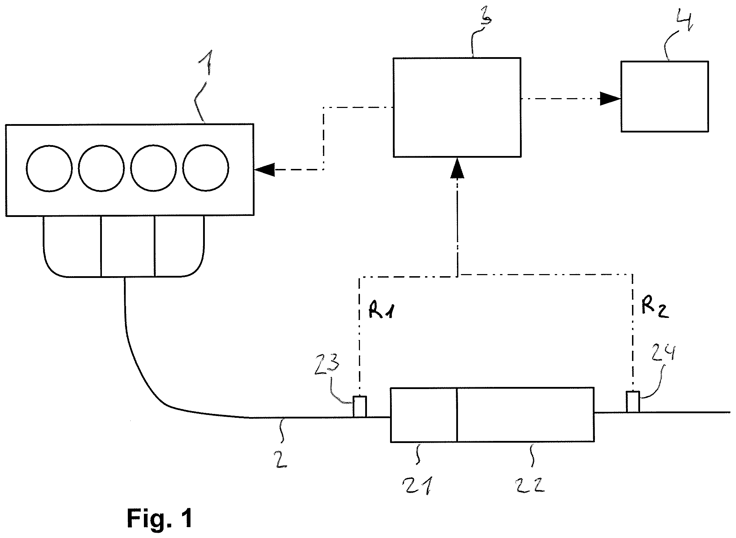

Un système de dépollution conforme à l'invention pour un véhicule et tel qu'illustré par la figure 1 comporte un moteur 1 thermique générant des gaz d'échappement, une ligne d'échappement 2 pour évacuer les gaz et les traiter, et une unité centrale 3 pour mettre en œuvre un procédé de diagnostic conforme à l'invention. L'unité centrale 3 peut être spécifique ou mettre en œuvre également d'autres fonctions du véhicule telles que le pilotage du moteur 1.

La ligne d'échappement 2 comporte un catalyseur d'oxydation 21 suivi par un piège à oxydes d'azote 22. Une première sonde 23 à oxygène est placée en amont du catalyseur d'oxydation 21 et une deuxième sonde 24 à oxygène est placée en aval du piège à oxydes d'azote 22. Chaque sonde 23, 24 délivre un signal R1, R2 qui est une indication de la richesse des gaz d'échappement, avec une valeur inférieure à 1 lorsque les gaz sont oxydants et supérieure à 1 lorsqu'ils sont réducteurs.

Lors du fonctionnement normal du moteur 1, la richesse des gaz d'échappement varie en fonction du couple demandé et est en général inférieure à 1 dans le cas d'un moteur Diesel. Le piège à oxydes d'azote 22 stocke des oxydes d'azote afin de diminuer la proportion de ceux-ci dans les gaz qui sont rejetés.

Lorsque l'on souhaite effectuer un déstockage des oxydes d'azote, l'unité centrale 3 pilote le moteur 1 afin de générer des gaz d'une richesse supérieure à un. Lorsque le déstockage est terminé, l'unité centrale 3 pilote un mode de fonctionnement normal, dit également de stockage.

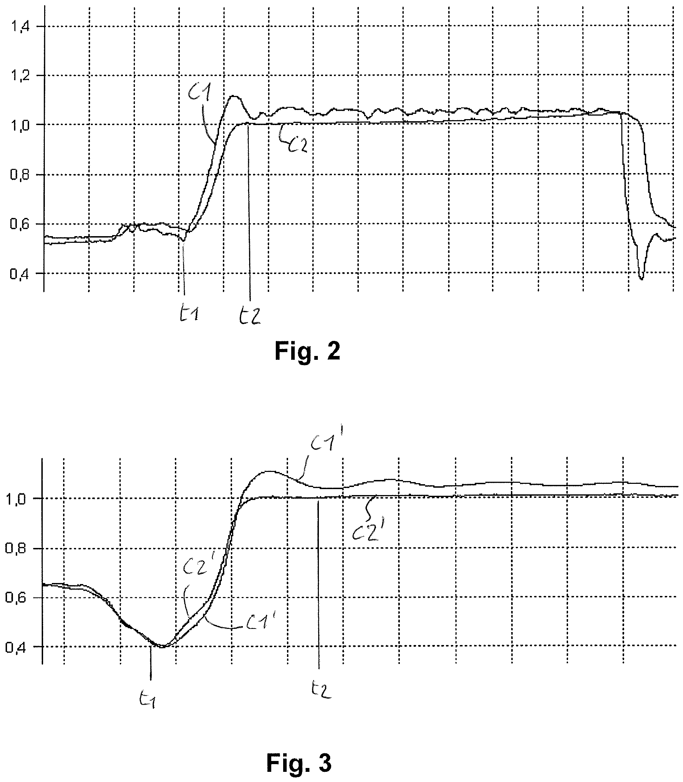

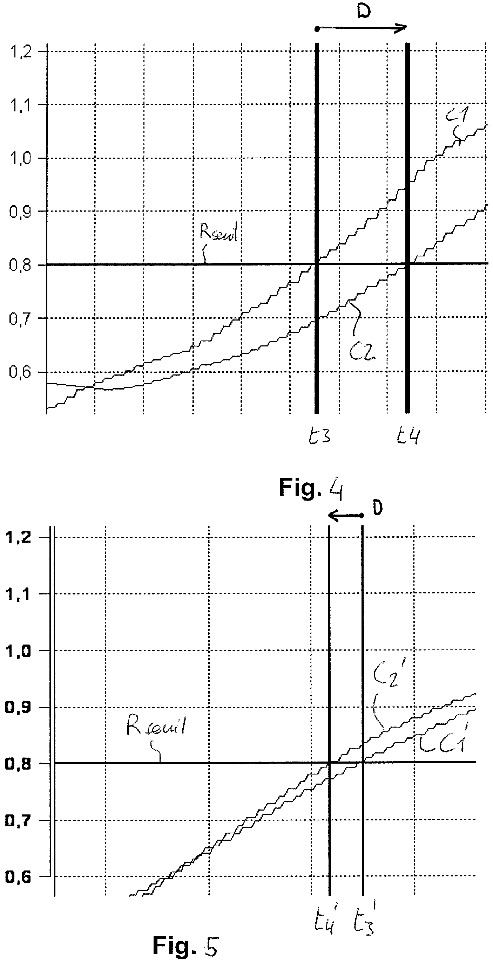

La figure 2 montre l'évolution des signaux des sondes, représentés respectivement par une première et une deuxième courbe C1, C2, pendant la phase de purge, pour des sondes 23, 24 sans défaillance. Les courbes C1, C2 des deux sondes 23, 24 ont sensiblement la même allure, avec une variation importante entre les instants t1 et t2, mais avec un décalage temporel dû au temps de transit des gaz dans le catalyseur d'oxydation 21 et le piège à oxydes d'azote 22, le signal de la deuxième sonde 24 étant en retard. La figure 4 montre en détail cette phase de transition.

Selon un exemple d'un procédé diagnostic, on mesure le décalage temporel entre les instants t3 et t4 définis par le passage des signaux respectifs à un seuil de détection Rseuil, égal en l'occurrence à 0,8. Le seuil de détection est déterminé par la formule :

$$R_{seuil} = R_{min} + (R_{max} - R_{min})\alpha$$

avec Rmin la mesure de la deuxième sonde 24 à l'instant t1, Rmax la richesse de consigne en amont du piège à oxydes d'azote 22 et $\alpha$ un coefficient choisi ici à 0,5. Il pourrait sans problème être choisi entre 0,2 et 0,8.

On compare ensuite un décalage temporel défini par D=t4-t3 à un intervalle [S1, S2]. Lorsque le décalage temporel D est inférieur à la première borne S1 de l'intervalle, on conclut que la première sonde 23 est défaillante. Lorsque le décalage temporel D est supérieur à la deuxième borne S2 de l'intervalle, on conclut que la deuxième sonde 24 est défaillante. Lorsque le décalage temporel D appartient à l'intervalle [S1, S2], aucune défaillance n'est diagnostiquée. Lorsque le diagnostic conclut à une défaillance, une alerte est générée et est transmise par exemple au conducteur du véhicule par l'intermédiaire d'un moyen d'affichage 4, d'une manière connue en soi. La première borne S1 est par exemple zéro, et la deuxième borne S2 est déterminée en fonction du débit de gaz d'échappement. Plus le débit est important, plus la deuxième borne S2 est proche de la première borne S1. La borne S2 est déterminée par la réalisation d'une série d'essais au banc moteur. Grâce à un banc moteur doté d'une ligne d'échappement comportant un débitmètre, un piège à oxydes d'azote et la première et la deuxième sonde, on réalise une exploration de l'ensemble des points de fonctionnement du moteur en mesurant le temps de réponse des sondes, de manière à prendre en compte la variation du temps de réponse en fonction de la variation du débit. Une étude statistique permet de compléter ces données afin de déterminer la borneI S2 robuste aux dispersions mais capable de diagnostiquer une sonde défaillante.

La figure 3 est une figure similaire à la figure 2 et qui illustre le fonctionnement avec une première sonde 23 défectueuse, présentant un temps de réponse allongé. On constate que les signaux C1', C2' des deux sondes 23, 24 pendant la phase de montée de la richesse sont presque superposés.

En se référant à la figure 4, qui montre un détail de la figure 2, le seuil de détection Rseuil est marqué par une droite horizontale d'ordonnée 0,8. Cette droite coupe la première courbe C1 à l'instant t3 et la deuxième courbe C2 à l'instant t4. On constate un décalage temporel D sensible entre les instants t3 et t4.

Par comparaison, en se référant à la figure 5, les instants t3' et t4' définis de la même manière que les instants t3 et t4 précédemment, sont inversés, de telle sorte que t4' est plus précoce que t3'. Si la première borne de l'intervalle est S1=0, on en conclut à la défaillance de la première sonde 23.

Selon un mode de réalisation du procédé selon l'invention, on évalue le décalage temporel par une intégration de la différence entre les signaux R1, R2 des sondes. L'intégration est réalisée entre un instant Ti et un instant Tf déterminés par les instants auxquels la deuxième sonde 24 atteint respectivement une richesse initiale Rini et un seuil d'intégration Rfinal. La richesse initiale Rini est déterminée par une mesure initiale du signal de la première sonde 23 avant la variation de richesse pilotée. Le seuil d'intégration Rfinal est prédéterminé et vaut par exemple 0,95. Il pourrait être compris entre 0,8 et 1. Le décalage temporel D est alors évalué par la formule :

$$D = \int_{Ti}^{Tf} (R_1 - R_2)dt$$

Le décalage temporel D est comparé, comme dans le premier mode de réalisation, à un intervalle [S1, S2] permettant les mêmes conclusions.

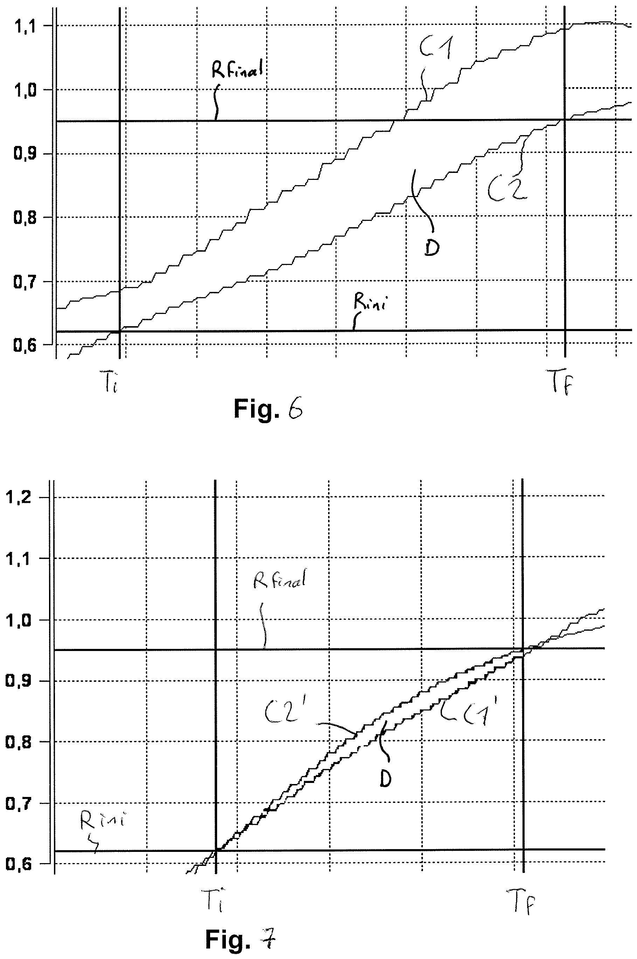

En se référant à la figure 6, qui montre un détail de la figure 2, la mesure de la richesse initiale Rini est réalisée à l'instant de départ de la phase de déstockage, ce qui lui donne dans cet exemple une valeur de 0,62, repérée par une droite horizontale sur la figure 6. L'instant Ti est défini par l'intersection de cette droite avec la deuxième courbe C2. Le seuil d'intégration Rfinal est également repéré par une droite horizontale et l'instant Tf est l'intersection de cette droite avec la deuxième courbe C2. Le décalage temporel est illustré par l'aire située entre ces deux instants Ti et Tf et les deux courbes C1, C2.

Par comparaison, la figure 7 illustre un détail de la figure 3 lorsque la première sonde 23 est défectueuse. Sur l'intervalle d'intégration [Ti, Tf], la première courbe C1' est située essentiellement sous la deuxième courbe C2'. La valeur de l'intégrale est donc négative, de telle sorte que le décalage temporel D est inférieur à la première borne S1=0. On conclut donc que la première sonde 23 est défectueuse.

L'invention n'est pas limitée au mode de réalisation qui a été décrit à titre d'exemple. On pourra par exemple évaluer le décalage temporel sur la phase de fin de purge du piège à oxydes d'azote 22.

## Revendications

1. Procédé de diagnostic d'un système de dépollution, le système de dépollution comportant un piège à oxydes d'azote (22) recevant les gaz d'échappement d'un moteur (1) thermique pour capter des oxydes d'azotes, une première sonde (23) à oxygène placée en amont du piège à oxydes d'azote (22) et une deuxième sonde (24) à oxygène placée en aval du piège à oxydes d'azote (22), les sondes à oxygène (23, 24) délivrant un signal représentatif d'une richesse des gaz d'échappement, selon le procédé on commande une variation de la richesse des gaz d'échappement, on compare la réponse (R1, R2) des deux sondes (23, 24) et on déduit que l'une des sondes (23, 24) est défectueuse si le décalage temporel (D) des réponses (R1, R2) n'est pas dans un intervalle ([S1, S2]) prédéterminé, l'intervalle ([S1, S2]) comportant une première borne (S1) inférieure à une deuxiéme borne (S2), **caractérisé en ce que** le décalage temporel (D) est déterminé par l'intégration de la différence de mesure entre la deuxième et la première sonde (24, 23) sur une période d'intégration ([Ti,Tf]) qui suit le début de la variation de richesse pilotée.

2. Procédé de diagnostic selon la revendication 1, dans lequel la période d'intégration ([Ti,Tf]) commence lorsque la deuxième sonde (24) fournit une mesure correspondant à une mesure initiale (Rini) du signal de la première sonde (23) à l'instant de départ de la phase de déstockage et se termine lorsque le signal de la deuxième sonde (24) atteint un seuil d'intégration (Rfinal) prédéterminé.

3. Procédé selon l'une des revendications 1 ou 2, selon lequel, lorsque le décalage temporel (D) est inférieur à la première borne de l'intervalle ([S1, S2]), on conclut que la première sonde (23) est défaillante.

4. Procédé selon l'une des revendications 1 ou 2, selon lequel lorsque le décalage temporel (D) est supérieur à la deuxième borne de l'intervalle ([S1, S2]), on conclut que la deuxième sonde (24) est défaillante.

5. Procédé selon l'une des revendications 1 à 4, selon lequel l'intervalle ([S1, S2]) est prédéterminé en fonction du débit volumique des gaz d'échappement.

6. Système de dépollution comportant un piège à oxydes d'azote (22) recevant les gaz d'échappement d'un moteur (1) thermique pour capter des oxydes d'azotes, une première sonde (23) à oxygène placée en amont du piège à oxydes d'azote (22), une deuxième sonde (24) à oxygène placée en aval du piège à oxydes d'azote (22), les sondes à oxygène délivrant un signal représentatif du taux d'oxygène dans les gaz d'échappement, et une unité centrale (3) recevant les signaux des sondes, l'unité centrale (3) étant agencée pour mettre en œuvre un procédé de diagnostic selon l'une des revendications 1 à 5, selon lequel l'unité centrale (3) commande une variation de la richesse des gaz d'échappement, compare la réponse (R1, R2) des deux sondes et déduit que l'une des sondes (23, 24) est défectueuse si le décalage temporel (D) des réponses (R1, R2) n'est pas dans un intervalle ([S1, S2]) prédéterminé, l'intervalle ([S1, S2]) comportant une première borne (S1) inférieure à une deuxiéme borne (S2), **caractérisé en ce que** décalage temporel (D) étant déterminé par l'intégration de la différence de mesure entre la deuxième et la première sonde (24, 23) sur une période d'intégration ([Ti,Tf]) qui suit le début de la variation de richesse pilotée.

## Patentansprüche

1. Verfahren zur Diagnose eines Abgasnachbehandlungssystems, wobei das Abgasnachbehandlungssystem eine Stickoxidfalle (22) aufweist, die die Abgase eines Verbrennungsmotors (1) aufnimmt, um Stickoxide aufzufangen, einen ersten Sauerstoffsensor (23), der vor der Stickoxidfalle (22) angeordnet ist, und einen zweiten Sauerstoffsensor (24), der nach der Stickoxidfalle (22) angeordnet ist, wobei die Sauerstoffsensoren (23, 24) ein Signal liefern, das einer Anreicherung der Abgase entspricht, wobei bei dem Verfahren

eine Variation der Anreicherung der Abgase gesteuert wird, die Antworten (R1, R2) der beiden Sensoren (23, 24) verglichen werden und daraus gefolgert wird, dass einer der Sensoren (23, 24) defekt ist, wenn die zeitliche Verschiebung (D) der Antworten (R1, R2) nicht in einem vorbestimmten Intervall ([S1, S2]) liegt, wobei das Intervall ([S1, S2]) einen ersten Grenzwert (S1) aufweist, der kleiner ist als ein zweiter Grenzwert (S2), **dadurch gekennzeichnet, dass** die zeitliche Verschiebung (D) durch Integration der Messdifferenz zwischen dem zweiten und dem ersten Sensor (24, 23) über einen Integrationszeitraum ([Ti, Tf]) bestimmt wird, der dem Beginn der gesteuerten Variation der Anreicherung folgt.

2. Diagnoseverfahren nach Anspruch 1, wobei der Integrationszeitraum ([Ti, Tf]) beginnt, wenn der zweite Sensor (24) eine Messung liefert, die einer anfänglichen Messung (Rini) des Signals des ersten Sensors (23) im Moment des Beginns der Beseitigungsphase entspricht, und endet, wenn das Signal des zweiten Sensors (24) eine vorbestimmte Integrationsschwelle (Rfinal) erreicht.

3. Verfahren nach einem der Ansprüche 1 oder 2, wobei wenn die zeitliche Verschiebung (D) kleiner als der erste Grenzwert des Intervalls ([S1, S2]) ist, daraus geschlossen wird, dass der erste Sensor (23) defekt ist.

4. Verfahren nach einem der Ansprüche 1 oder 2, wobei wenn die zeitliche Verschiebung (D) größer als der zweite Grenzwert des Intervalls ([S1, S2]) ist, daraus geschlossen wird, dass der zweite Sensor (24) defekt ist.

5. Verfahren nach einem der Ansprüche 1 bis 4, wobei das Intervall ([S1, S2]) als Funktion des Volumenstroms der Abgase vorbestimmt ist.

6. System zur Abgasnachbehandlung, das eine Stickoxidfalle (22) aufweist, die die Abgase eines Verbrennungsmotors (1) aufnimmt, um Stickoxide aufzufangen, einen ersten Sauerstoffsensor (23), der vor der Stickoxidfalle (22) angeordnet ist,

einen zweiten Sauerstoffsensor (24), der nach der Stickoxidfalle (22) angeordnet ist, wobei die Sauerstoffsensoren ein Signal liefern, das dem Sauerstoffgehalt in den Abgasen entspricht, und eine Zentraleinheit (3), die die Signale der Sonden empfängt,

wobei die Zentraleinheit (3) angeordnet ist, ein Diagnoseverfahren nach einem der Ansprüche 1 bis 5 durchzuführen, wobei die Zentraleinheit (3) eine Variation der Anreicherung der Abgase steuert, die Antworten (R1, R2) der beiden Sensoren vergleicht und daraus folgert, dass einer der Sensoren (23, 24) defekt ist, wenn die zeitliche Verschiebung (D) der Antworten (R1, R2) nicht in einem vorbestimmten Intervall ([S1, S2]) liegt, wobei das Intervall ([S1, S2]) einen ersten Grenzwert (S1) aufweist, der kleiner ist als ein zweiter Grenzwert (S2), **dadurch gekennzeichnet, dass** die zeitliche Verschiebung (D) durch Integration der Messdifferenz zwischen dem zweiten und dem ersten Sensor (24, 23) über einen Integrationszeitraum ([Ti, Tf]) bestimmt wird, der dem Beginn der gesteuerten Variation der Anreicherung folgt.

## Claims

1. Method for diagnosing an after-treatment system, the after-treatment system comprising a nitrogen oxide trap (22) that receives the exhaust gases of a heat engine (1) in order to capture nitrogen oxides, a first oxygen probe (23) placed upstream of the nitrogen oxide trap (22) and a second oxygen probe (24) placed downstream of the nitrogen oxide trap (22), the oxygen probes (23, 24) delivering a signal representative of a richness of the exhaust gases, according to the method a variation of the richness of the exhaust gases is controlled, the response (R1, R2) of the two probes (23, 24) is compared and it is deduced that one of the probes (23, 24) is defective if the time lag (D) of the responses (R1, R2) is not within a predetermined range ([S1, S2]), the range ([S1, S2]) comprising a first limit (S1) lower than a second limit (S2), **characterized in that** the time lag (D) is determined by the integration of the difference in measurement between the second probe and the first probe (24, 23) over an integration period ([Ti,Tf]) which follows the start of the controlled richness variation.

2. Diagnostic method according to Claim 1, in which the integration period ([Ti,Tf]) begins when the second probe (24) provides a measurement corresponding to an initial measurement (Rini) of the signal of the first probe (23) at the start time of the desorption phase and finishes when the signal of the second probe (24) reaches a predetermined integration threshold (Rfinal).

3. Method according to Claim 1 or 2, according to which, when the time lag (D) is lower than the first limit of the range ([S1, S2]), it is concluded that the first probe (23) is defective.

4. Method according to Claim 1 or 2, according to which, when the time lag (D) is greater than the second limit of the range ([S1, S2]), it is concluded that the second probe (24) is defective.

5. Method according to one of Claims 1 to 4, according to which the range ([S1, S2]) is predetermined as a function of the volume flow rate of the exhaust gases.

6. After-treatment system comprising a nitrogen oxide trap (22) that receives the exhaust gases of a heat engine (1) in order to capture nitrogen oxides, a first oxygen probe (23) placed upstream of the nitrogen oxide trap (22) and a second oxygen probe (24) placed downstream of the nitrogen oxide trap (22), the oxygen probes delivering a signal representative of the content of oxygen in the exhaust gases and a central unit (3) receiving the signals of the probes, the central unit (3) being arranged to carry out a diagnostic method according to one of Claims 1 to 5, according to which method the central unit (3) controls a variation of the richness of the exhaust gases, compares the response (R1, R2) of the two probes (23, 24) and deduces that one of the probes (23, 24) is defective if the time lag (D) of the responses (R1, R2) is not within a predetermined range ([S1, S2]), the range ([S1, S2]) comprising a first limit (S1) lower than a second limit (S2), **characterized in that** the time lag (D) is determined by the integration of the difference in measurement between the second probe and the first probe (24, 23) over an integration period ([Ti,Tf]) which follows the start of the controlled richness variation.

**Fig. 1**

**Fig. 2**

**Fig. 3**

**Fig. 4**

**Fig. 5**

**Fig. 6**

**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2916017

- FR 2940460 A1